# EUROPEAN PATENT APPLICATION

(11) **EP 4 699 834 A1**
(43) Date of publication of application: **25.02.2026**
(21) Application number: 24196097.0
(22) Date of filing: 23.08.2024
(51) Int. Cl.: B60H 1/26, B60H 1/00

(54) **VENTILATION ARRANGEMENT AND VEHICLE**

(71) Applicant: Traton AB, 151 87 Södertälje (SE)
(72) Inventor: VENUGOPAL, Deepu, 15160 Södertälje (SE); WAHLQVIST, Jörgen, 61933 Trosa (SE); ÅSELL, Fredrik, 15395 Järna (SE); MGHARI, Israe, 15148 Södertälje (SE); PATEL, Meghavi, 11217 Stockholm (SE)
(74) Representative: Scania CV AB

(57) **Abstract**

Ventilation arrangement configured to generate an airflow into an occupant compartment of a vehicle, comprising an air-conducting housing comprising a first set of air inlets, an interior volume, an outlet (11), and a ventilation apparatus configured to deliver air from the outlet (11) of the air-conducting housing into the occupant compartment, wherein the air-conducting housing comprises a first guide vane assembly (5) in the interior volume forming a number of flow paths (p1-p6) each extending from at least one air inlet of the first set of air inlets to the outlet (11), and wherein each of the number of flow paths (p1-p6) has an increasing effective cross sectional area in a direction of the flow path (p1-p6).

## Description

### TECHNICAL FIELD

The present disclosure relates to a ventilation arrangement configured to generate an airflow into an occupant compartment of a vehicle. The present disclosure further relates to a vehicle comprising an occupant compartment and a ventilation arrangement.

### BACKGROUND

The occupant compartment of a vehicle refers to the enclosed space within a vehicle where passengers and the driver are situated. This compartment is designed to provide comfort, safety, and accessibility to vehicle controls and amenities. Features of the occupant compartment typically include seating arrangements, dashboard and control interfaces, and various safety mechanisms like airbags and seat belts. It is an area engineered for ergonomic efficiency, noise reduction, and thermal comfort to ensure a pleasant experience for occupants during travel.

A ventilation apparatus in a vehicle manages the intake and circulation of air within the occupant compartment. This apparatus ensures that fresh air is supplied while stale air is expelled, maintaining a healthy and comfortable environment inside the occupant compartment. The ventilation apparatus usually comprises a heating element to heat the air when necessary and may also comprise a cooling radiator for providing cooled air to the occupant compartment. Air is typically drawn into the ventilation apparatus through air inlets located at the front of the vehicle near the grille or at a base of the windshield.

Water ingress into the ventilation system of a vehicle can lead to a multitude of problems that compromise both the functionality and overall comfort within the occupant compartment. When water enters the system, it can cause significant damage to various components, particularly those not designed to withstand prolonged exposure to moisture. Electrical elements within the ventilation apparatus, such as the fan motor and control circuits, are especially vulnerable. These components may short-circuit or corrode, leading to malfunction or failure, which can be costly and time-consuming to repair.

Furthermore, the presence of water in the ventilation system can result in unpleasant odours spreading throughout the occupant compartment. This smell often arises from stagnant water trapped within the ducts or filters, providing an ideal environment for mould and mildew to thrive. Once established, mould can spread throughout the ventilation network, releasing spores into the air circulated within the vehicle. This not only exacerbates the odour problem but also poses health risks to the occupants, particularly for those with respiratory conditions or allergies.

The accumulation of water also places an extra load on the system's fan. As moisture-laden filters become saturated, they create an increased pressure drop across the system, making the fan work harder to push air through. This additional strain can lead to premature wear of the fan motor, reducing its efficiency and lifespan. The compromised airflow can result in inadequate ventilation, leading to discomfort for the vehicle's occupants, especially during extreme weather conditions.

Wet filters may remain damp for extended periods, especially in humid environments, prolonging the time during which these issues persist. The inability of the filters to dry out quickly can lead to continuous odour problems and sustained mould growth, worsening the discomfort and potential health hazards. This moisture-laden environment not only diminishes air quality but also reduces the effectiveness of the heating and cooling functions of the ventilation system, leading to a less controlled and less comfortable climate within the occupant compartment.

Implementing solutions to separate water from the airflow, such as specialised filters or deflectors, can help prevent water ingress but often at the cost of increasing the pressure drop within the system. A higher pressure drop means that more energy is required to move air through the ventilation system, which can lead to reduced efficiency and increased wear on the fan motor. Additionally, a higher pressure drop can decrease the overall airflow, leading to weaker ventilation performance and potentially inadequate heating or cooling of the occupant compartment.

A low pressure drop through the ventilation system can improve the total energy efficiency of the vehicle. When the ventilation system operates more efficiently, it requires less power from the vehicle's electrical system, which can, in turn, reduce fuel consumption in conventional vehicles or extend the range in electric vehicles. Improved energy efficiency not only lowers running costs but also contributes to reduced environmental impact, as lower fuel consumption results in fewer emissions. For electric vehicles, increased efficiency can help extend driving range, enabling drivers to travel further on a single charge with greater confidence. Thus, maintaining a low pressure drop within the ventilation system not only enhances comfort and reliability but also supports broader goals of energy efficiency and sustainability in vehicle design.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a ventilation arrangement configured to generate an airflow into an occupant compartment of a vehicle, wherein the ventilation arrangement comprises an air-conducting housing comprising a first set of air inlets, an interior volume, and an outlet, and a ventilation apparatus configured to deliver air from the outlet of the air-conducting housing into the occupant compartment. The air-conducting housing comprises a first guide vane assembly in the interior volume forming a number of flow paths each extending from at least one air inlet of the first set of air inlets to the outlet, and wherein each of the number of flow paths has an increasing effective cross sectional area in a direction of the flow path.

Thereby, a ventilation arrangement is provided having conditions for efficiently separating water entering the air-conducting housing via the first set of air inlets while maintaining a low pressure drop through the ventilation arrangement. This is because the air-conducting housing comprises the first guide vane assembly forming the number of flow paths, wherein each of the number of flow paths has an increasing effective cross sectional area in a direction of the flow path.

The increasing effective cross sectional area in the direction of the flow path results in a decreased air flow velocity along the flow path. This reduced air flow velocity along the flow path results in an efficient water separating capability from the air while maintaining a low pressure drop through the ventilation arrangement.

Accordingly, a ventilation arrangement is provided capable of preventing water ingress, thereby reducing the risk of damage to electrical components within the ventilation arrangement, and/or a ventilation system of a vehicle, and avoiding potential short circuits and corrosion that could result in costly repairs. Furthermore, the efficient separation of water can mitigate the occurrence of unpleasant odours and inhibits mould growth, thereby improving air quality and providing a healthier environment for the occupants.

Additionally, by maintaining a low pressure drop, the ventilation arrangement can operate with reduced mechanical strain on components and arrangements, such as a fan motor, enhancing energy efficiency of the vehicle and prolonging the lifespan of the ventilation arrangement.

Accordingly, a ventilation arrangement is provided overcoming, or at least alleviating, at least some of the above-mentioned problems and drawbacks. As a result, the above-mentioned object is achieved.

Optionally, the air-conducting housing comprises a second set of air inlets, and wherein the air-conducting housing comprises a second guide vane assembly in the interior volume forming a number of flow paths each extending from at least one air inlet of the second set of air inlets to the outlet, and wherein each of the number of flow paths has an increasing effective cross sectional area in a direction of the flow path. Thereby, a ventilation arrangement is provided having improved conditions for efficiently separating water entering the air-conducting housing while maintaining a low pressure drop through the ventilation arrangement. This is because the air-conducting housing also comprises the second guide vane assembly forming the number of flow paths, and wherein each of the number of flow paths has an increasing effective cross sectional area in the direction of the flow path.

According to a second aspect of the present disclosure, the object is achieved by a vehicle comprising an occupant compartment and a ventilation arrangement according to the first aspect of the present disclosure.

Thereby, a vehicle is provided having conditions for efficiently separating water entering the ventilation arrangement while maintaining a low pressure drop through the ventilation arrangement. Accordingly, a vehicle is provided capable of preventing water ingress, thereby reducing the risk of damage to electrical components within the ventilation arrangement, and/or a ventilation system of the vehicle, and avoiding potential short circuits and corrosion that could result in costly repairs. Furthermore, the efficient separation of water can mitigate the occurrence of unpleasant odours and inhibits mould growth, thereby improving air quality and providing a healthier environment for the occupants of the vehicle.

Additionally, by maintaining a low pressure drop, the ventilation arrangement can operate with reduced mechanical strain on components and arrangements, such as a fan motor, enhancing energy efficiency of the vehicle and prolonging the lifespan of the systems of the vehicle.

Accordingly, a vehicle is provided overcoming, or at least alleviating, at least some of the above-mentioned problems and drawbacks. As a result, the above-mentioned object is achieved.

Optionally, the first guide vane assembly comprises one or more first guide vanes and one or more second guide vanes, the one or more first guide vanes being arranged above the one or more second guide vanes relative to a vertical direction of the vehicle, and wherein each of the one or more first guide vanes is inclined downwards relative to the vertical direction in the direction of the flow paths. Thereby, it can be ensured that water is efficiently separated from the air within the air-conducting housing while maintaining a low pressure drop through the air-conducting housing. Moreover, it can be ensured that water being separated from the air can flow efficiently along the one or more first guide vanes, aided by gravity, towards a lower part of the air-conducting housing.

Optionally, each of the one or more first guide vanes has an increasing downward inclination along the direction of the flow paths. Thereby, it can be ensured that water is efficiently separated from the air within the air-conducting housing while maintaining a low pressure drop through the air-conducting housing. Moreover, the water separated from the airflow is directed more effectively towards the lower part of the air-conducting housing, enhancing the drainage efficiency and reducing the risk of water pooling or re-entering the airflow. Furthermore, it can be ensured that water is consistently guided away from the outlet of the air-conducting housing, minimizing the likelihood of damage and maintaining the overall efficiency and reliability of the ventilation arrangement.

Optionally, each of the one or more second guide vanes is inclined upward relative to the vertical direction in the direction of the flow paths. As indicated above, the one or more second guide vanes is/are arranged below the one or more first guide vanes relative to a vertical direction of the vehicle. Due to the upward inclination of the one or more second guide vanes, it can be ensured that any separated water from the airflow is prevented from reaching the outlet of the air-conducting housing. In other words, it can be ensured that water is consistently guided away from the outlet of the air-conducting housing, thereby minimizing the risk of moisture-related issues within the ventilation arrangement. This contributes to the longevity and reliability of the ventilation arrangement while ensuring that water is efficiently separated from the air within the air-conducting housing with a low pressure drop therethrough.

Optionally, each of the one or more second guide vanes has an increasing upward inclination along the direction of the flow paths. Thereby, the airflow is progressively directed further upward as it moves along the flow path, enhancing the separation of water from the air. This increasing upward inclination further ensures that any residual water droplets are more effectively diverted away from the outlet of the air-conducting housing, thereby reducing the likelihood of water entering the outlet of the air-conducting housing. As a result, it can be further ensured that water is efficiently separated from the air within the air-conducting housing while maintaining a low pressure drop through the air-conducting housing.

Optionally, each of the one or more second guide vanes is provided with one or more drainage apertures. Thereby, any water that accumulates on the surface of the second guide vanes can be efficiently drained away through the one or more drainage apertures, further preventing water from being carried along with the airflow towards the outlet of the air-conducting housing. Accordingly, this feature enhances the overall water separation capability of the ventilation arrangement, reducing the risk of moisture-related issues and ensuring that only dry air is delivered through the ventilation arrangement. As a result, the longevity and optimal performance of the ventilation arrangement and associated systems of the vehicle can be ensured.

Optionally, the air-conducting housing comprises a number of drainage apertures at a lower part thereof relative to a vertical direction of the vehicle. Thereby, it can be ensured that any water being separated from air inside the air-conducting housing can be efficiently drained away from the air-conducting housing, preventing it from entering the outlet of the air-conducting housing.

Optionally, the first set of air inlets is arranged at a distance from the outlet as measured along a lateral direction of the vehicle. The spatial separation between the air inlets and the outlet along the lateral direction of the vehicle ensures that the airflow has sufficient time and space for effective water separation, aided by gravity, before reaching the outlet. This arrangement reduces the likelihood of water being carried through to the outlet while maintaining a low pressure drop through the air-conducting housing. In other words, it can be further ensured that water is efficiently separated from the air within the air-conducting housing while maintaining a low pressure drop through the air-conducting housing.

Optionally, the air-conducting housing comprises a second set of air inlets, and wherein the air-conducting housing comprises a second guide vane assembly in the interior volume forming a number of flow paths each extending from at least one air inlet of the second set of air inlets to the outlet, and wherein the second set of air inlets is arranged at a distance from the outlet, and at a distance from the first set of air inlets, as measured along a lateral direction of the vehicle. The separation of the second set of air inlets from both the first set of air inlets and the outlet ensures that each airflow has sufficient time and space for effective water separation, also aided by gravity, before reaching the outlet. This design further enhances the water separation capability within the air-conducting housing, as the distinct flow paths created by the second guide vane assembly allow for more controlled and efficient air management and water separation capability. Consequently, the risk of water reaching the outlet is further minimized, ensuring that the ventilation arrangement operate with optimal efficiency and low pressure drop, while maintaining the reliability and longevity of the ventilation arrangement system and associated systems of the vehicle.

Optionally, the first and second sets of air inlets are arranged on respective lateral sides of the outlet. Thereby, it can be further ensured that water is efficiently separated inside the air-conducting housing while maintaining a low pressure drop through. This is because the placement of the air inlets on opposite sides of the outlet promotes a balanced distribution of airflow within the air-conducting housing which can enhance the effectiveness of water separation by allowing air to be evenly directed through the system, with water being efficiently separated by gravity and diverted away from the outlet. Additionally, this configuration helps to maintain a uniform pressure drop across the air-conducting housing, contributing to the overall efficiency and stability of the ventilation arrangement.

Optionally, the air-conducting housing form part of a front body panel of the vehicle, wherein the front body panel faces in a forward moving direction of the vehicle, and wherein the first set of air inlets is arranged to conduct air into the interior volume from a location in front of the front body panel with respect to the forward moving direction. Thereby, it can be ensured that relatively cold and fresh air is conducted into the air-conducting housing while ensuring an efficient separation of water flowing into the air-conducting housing and maintaining a low pressure drop through the ventilation arrangement.

Optionally, an angle between a surface normal of the front body panel at a region of the first set of air inlets and the forward moving direction of the vehicle is less than 30 degrees or is less than 10 degrees. Thereby, it can be ensured that air is directed into the air-conducting housing in an efficient manner while ensuring an efficient separation of water inside the interior volume of the air-conducting housing and maintaining a low pressure drop through the ventilation arrangement.

Optionally, the vehicle is a heavy road vehicle, such as a truck or a bus. Thereby, a heavy road vehicle is provided having at least some of the above mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a side view of a vehicle according to some embodiments,
Fig. 2 illustrates the vehicle illustrated in Fig. 1 in which a front body panel has been pivoted to an open position,
Fig. 3 illustrates a front view of the vehicle illustrated in Fig. 1 and Fig. 2,
Fig. 4 illustrates a section of the front body panel of the vehicle illustrated in Fig. 1 - Fig. 3,
Fig. 5 illustrates the section of the front body panel illustrated in Fig. 4 as seen towards a rear side thereof,
Fig. 6 illustrates a cross section through a portion of the vehicle illustrated in Fig. 1 - Fig. 3,
Fig. 7 illustrates a front view of a rear housing of an air-conducting housing of a ventilation arrangement of the vehicle illustrated in Fig. 1 - Fig. 3,
Fig. 8 illustrates an enlarged view of the rear housing illustrated in Fig. 7, and
Fig. 9 illustrates a perspective view of the rear housing illustrated in Fig. 7 and Fig. 8.

### DETAILED DESCRIPTION

Aspects of the present disclosure will now be described more fully. Like reference signs refer to like elements throughout. Well-known functions or constructions will not necessarily be described in detail for brevity and/or clarity.

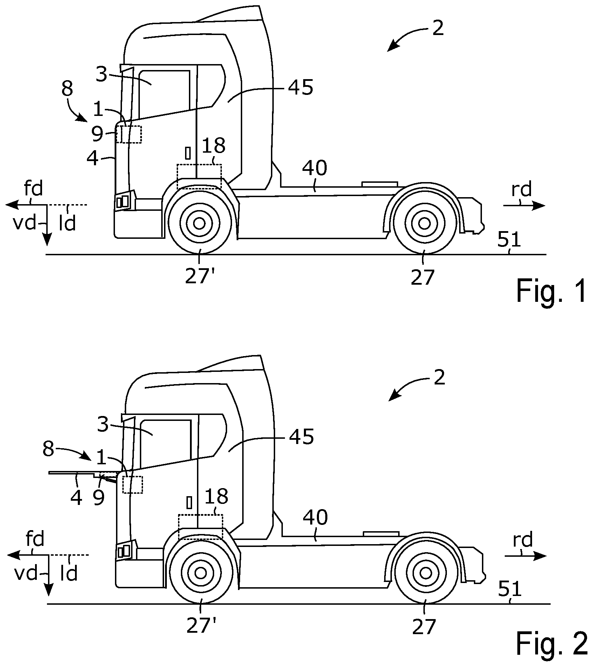

**Fig. 1** schematically illustrates a side view of a vehicle 2 according to some embodiments. According to the illustrated embodiments, the vehicle 2 is a truck, i.e., a type of heavy wheeled vehicle, as well as a type of heavy commercial vehicle. According to further embodiments, the vehicle 2, as referred to herein, may be another type of heavy or lighter type of manned or unmanned vehicle for land-based propulsion such as a lorry, a bus, a construction vehicle, a tractor, a dumper, a forestry machinery, a military vehicle, a car, or the like.

The vehicle 2 comprises an engine 18 configured to provide motive power to the vehicle 2. According to the illustrated embodiments, the engine 18 is an internal combustion engine. The engine 18 may be a diesel engine, i.e. a type of compression ignition engine. The engine 18 may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the engine 18 of the vehicle 2 may be an Otto engine with a spark-ignition device, wherein the Otto engine is configured to run on petrol, alcohol, a gaseous fuel, or combinations thereof. Alcohol, such as ethanol, can be derived from renewable biomass. The gaseous fuel may also be referred to as fuel gas and may encompass any type of fuel that under ordinary ambient temperature and pressure conditions are gaseous and which can be stored at pressure in a pressure tank and can be combusted in an internal combustion engine to produce useful work. Examples of such gaseous fuels are compressed natural gas (CNG), liquified natural gas (LNG), Liquefied Petroleum Gas (LPG), Hydrogen (H2), Biogas, and Syngas.

Many gaseous fuels can be derived from renewable sources, such as from renewable biomass. According to some embodiments, the engine 18 may be a dual fuel engine configured to operate using two different fuels, such as a gaseous fuel and a liquid fuel. According to embodiments herein, the engine 18 may be a four-stroke internal combustion engine.

According to the illustrated embodiments, the vehicle 2 comprises the engine 18 as the only means of providing motive power to the vehicle 2. However, according to further embodiments, the vehicle 2 may be a so called hybrid electric vehicle comprising one or more electric propulsion machines, in addition to the engine 18, for providing motive power to the vehicle 2. Moreover, according to some embodiments, the vehicle 2 may comprise an electric propulsion system as the only means for providing motive power to the vehicle 2 and no internal combustion engine. In such embodiments, the vehicle 2 may be referred to as a pure electric vehicle 2. In embodiments in which the vehicle 2 comprises an at least partially electric powertrain, the vehicle 2 may comprise a propulsion battery configured to provide electricity to one or more electric propulsion machines of the at least partially electric powertrain.

According to the illustrated embodiments, the vehicle 2 is a wheeled vehicle comprising a number of wheels 27, 27'. According to the embodiments illustrated in Fig. 1, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. In other words, in these embodiments, the engine 18 is configured to provide motive power to the vehicle 2 via the driven wheels 27 of the vehicle 2. However, according to further embodiments, the vehicle 2 may comprise another configuration of driven and non-driven wheels.

In Fig. 1, the vehicle 2 is illustrated as positioned in an intended use position on a flat surface 51 supporting the vehicle 2. As seen in Fig. 1, the number of wheels 27, 27' of the vehicle 2 is configured to abut against the flat surface 51 when the vehicle 2 is positioned in the intended use position thereon. Moreover, in Fig. 1, a forward moving direction fd and a reverse moving direction rd of the vehicle 2 are indicated. The reverse moving direction rd of the vehicle 2 is opposite to the forward moving direction fd of the vehicle 2. Furthermore, in Fig. 1, a longitudinal direction Id of the vehicle 2 is indicated. The longitudinal direction Id of the vehicle 2 is parallel to each of the forward moving direction fd and the reverse moving direction rd of the vehicle 2. Moreover, the longitudinal direction Id of the vehicle 2 is parallel to a flat surface 51 when the vehicle 2 is positioned in the intended use position thereon.

Furthermore, a vertical direction vd of the vehicle 2 is indicated in Fig. 1. The vertical direction vd of the vehicle 2 is perpendicular to the longitudinal direction Id of the vehicle 2. Moreover, the vertical direction vd of the vehicle 2 coincides with a local gravity vector when the flat surface 51 supporting the vehicle 2 is a horizontal surface.

The number of wheels 27, 27' of the vehicle 2 is supported relative to the chassis 40 via wheel axles. According to some embodiments, the vehicle 2 may comprise a wheel suspension system resiliently suspending the wheels 27, 27' of the vehicle 2 relative to the chassis 40. The chassis 40 of the vehicle 2 serves as a structural framework that supports other components and systems of the vehicle 2, such as the engine 18 and a cab 45 of the vehicle 2.

That is, as is seen in Fig. 1, according to the illustrated embodiments, the vehicle 2 comprises a cab 45. According to the illustrated embodiments, the cab 45 is resiliently suspended relative to the chassis 40. The cab 45 accommodates an occupant compartment 3. The occupant compartment 3 is arranged to accommodate one or more vehicle occupants, such as a driver and possibly one or more passengers. According to the illustrated embodiments, the occupant compartment 3 also comprises a driver environment of the vehicle 2. The term "driver environment" refers to the area within the vehicle 2 where a driver operates and controls the vehicle 2. The driver environment typically includes the driver's seat, steering wheel, pedals, dashboard, and other control interfaces and displays that the driver may use to manage the functions of the vehicle 2.

The chassis 40 of the vehicle 2 may comprise two elongated frame beams. A direction of elongation of each of the two elongated frame beams may be substantially parallel to the longitudinal direction Id of the vehicle 2. In this context, the wording "substantially parallel to", as used herein, may encompass that the angle between the objects referred to is less than 10 degrees, or is less than 7 degrees. The two elongated frame beams may be attached to each other via a number of cross members. These cross members may provide additional structural support and rigidity, ensuring that the frame beams maintain their alignment and can withstand the stresses encountered during vehicle operation. The chassis 40 may moreover comprise a number of subframes each arranged to support a structure, component, or system relative to at least one frame beam of the two elongated frame beams.

The vehicle 2 further comprises a front body panel 4 facing in a forward moving direction fd of the vehicle 2. According to the illustrated embodiments, the front body panel 4 is hinged so that it can be pivoted between a closed position and an open position. In Fig. 1, the front body panel 4 is shown in the closed position.

As schematically indicated in Fig. 1, the vehicle 2 comprises a ventilation arrangement 8. The ventilation arrangement 8 is configured to generate an airflow into the occupant compartment 3 of a vehicle 2. As is further explained herein, the ventilation arrangement 8 comprises an air-conducting housing 9 comprising air inlets, an interior volume, and an outlet. According to the illustrated embodiments, the air-conducting housing 9 form part of the front body panel 4. However, according to further embodiments, the air-conducting housing 9 may be part of another section of the vehicle 2. The ventilation arrangement 8 further comprises a ventilation apparatus 1 configured to deliver air from the outlet of the air-conducting housing 9 into the occupant compartment 3. These aspects are explained in greater detail below.

**Fig. 2** illustrates the vehicle 2 illustrated in Fig. 1 in which the front body panel 4 has been pivoted to the open position. According to the illustrated embodiments, the front body panel 4 can be pivoted to the open position to allow access to a front utility compartment of the vehicle 2. As understood from the above described, the front utility compartment is located behind the front body panel 4 with respect to the forward moving direction fd of the vehicle 2 when the front body panel 4 is in the closed position as illustrated in Fig. 1.

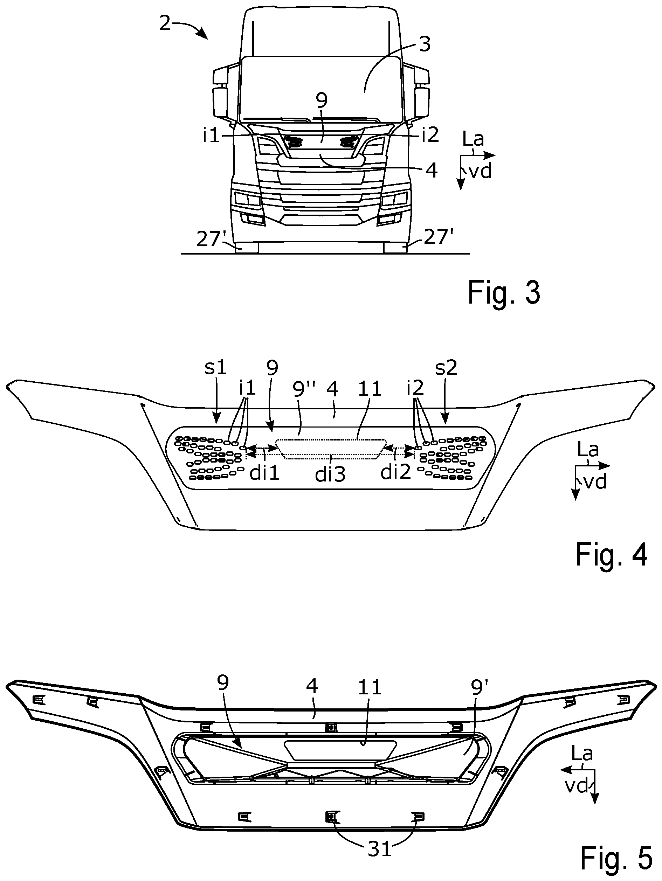

**Fig. 3** illustrates a front view of the vehicle 2 illustrated in Fig. 1 and Fig. 2. In Fig. 3, the front body panel 4 is illustrated in the closed position. As can be seen in Fig. 3, according to the illustrated embodiments, the front body panel 4 is a large sized vehicle panel forming exterior surfaces of the vehicle 2. Below, simultaneous reference is made to Fig. 1 - Fig. 3, if not indicated otherwise. According to the illustrated embodiments, the front body panel 4 is designed to allow airflow through portions of it to cool a number of radiators arranged behind the front body panel 4 and provide ventilation of the front utility compartment. This part of the front body panel 4 may also be referred to as a front grille of the vehicle 2.

The front body panel 4 may be designed to reduce air resistance to improving fuel efficiency and overall performance. Additionally, it may be arranged to shield the engine 18 and other critical components from external elements such as dirt, debris, and weather conditions. Moreover, since it is hinged, the front body panel 8 allows easy access to the front utility compartment for maintenance and repairs. It also contributes to the truck's visual appeal, providing a sleek and cohesive look. Moreover, the front body panel 8 may include features like crumple zones to absorb impact energy in the event of a collision, enhancing overall vehicle safety. Since the front body panel 4 is hinged to be pivoted between the open and closed positions, the front body panel 4 may also be referred to as a hatch, a front hatch, a front utility compartment hatch, or similar, according to the illustrated embodiments.

In Fig. 3, a lateral direction La of the vehicle 2 is indicated. The lateral direction La of the vehicle 2 is perpendicular to each of the longitudinal direction Id of the vehicle 2 and the vertical direction vd of the vehicle 2.

**Fig. 4** illustrates a section 4' of the front body panel 4 of the vehicle 2 illustrated in Fig. 1 - Fig. 3. The section 4' of the front body panel 4 comprises the air-conducting housing 9. The air-conducting housing 9 is also indicated in Fig. 1 - Fig. 3. Below, simultaneous reference is made to Fig. 1 - Fig. 4, if not indicated otherwise. In Fig. 4, the section 4' of the front body panel 4 is illustrated as seen towards a front side thereof. The front side of the section 4' of the front body panel 4 faces in the forward moving direction fd of the vehicle 2 when the front body panel 4 is in the closed position.

The air-conducting housing 9 comprising a first set s1 of air inlets i1 and a second set s2 of air inlets i2. According to the illustrated embodiments, the second set s2 of air inlets i2 is arranged at a distance di3 from the first set s1 of air inlets i1, as measured along the lateral direction La of the vehicle 2. In Fig. 4, only some air inlets i1 of the first set s1 of air inlets i1 have been provided with the reference sign "i1", and only some second air inlets i2 of the second set s2 of air inlets i2 have been provided with the reference sign "i2", for reasons of brevity and clarity.

According to the illustrated embodiments, the distance di3 between the first and second sets s1, s2 of air inlets i1, i2, as measured along the lateral direction La of the vehicle 2, exceeds 10 cm. Moreover, according to some embodiments, the distance di3 between the first and second sets s1, s2 of air inlets i1, i2, as measured along the lateral direction La of the vehicle 2, may exceed 20 cm or 30 cm.

Each air inlet a1, a2 of the air-conducting housing 9 is arranged to conduct air into an interior volume of the air-conducting housing 9 from a location in front of the front body panel 4 with respect to the forward moving direction fd of the vehicle 2. According to the illustrated embodiments, each of the first set s1 of air inlets i1 and the second set s2 of air inlets i2 is part of the front body panel 4. That is, as understood from the above described, the first set s1 of air inlets i1 and the second set s2 of air inlets i2 are part of the air-conducting housing 9 of the front body panel 4. That is, according to the illustrated embodiments, each of the first set s1 of air inlets i1 and the second set s2 of air inlets i2 is provided as a through hole extending through an external wall of the air-conducting housing 9.

**Fig. 5** illustrates the section 4' of the front body panel 4 illustrated in Fig. 4 as seen towards a rear side thereof. Below, simultaneous reference is made to Fig. 1 - Fig. 5, if not indicated otherwise. The rear side of the section 4' of the front body panel 4 faces in the reverse moving direction rd of the vehicle 2 when the front body panel 4 is in the closed position.

In Fig. 5, a number of attachment portions 31 of the section 4' of the front body panel 4 are indicated. The section 4' of the front body panel 4 is configured to be attached to the remaining part of the front body panel 4 via the number of attachment portions 31. In Fig. 5, only two of the number of attachment portions 31 have been provided with reference signs for reasons of brevity and clarity.

The outlet 11 of the air-conducting housing 9 is seen in Fig. 5. The outlet 11 of the air-conducting housing 9 may also be referred to as an air outlet. The outlet 11 of the air-conducting housing 9 is also schematically indicated in Fig. 4. As is further explained herein, the ventilation apparatus 1 is configured to suck air from the outlet 11 of the air-conducting housing 9 to generate an airflow into the occupant compartment 3 of the vehicle 2.

As indicated in Fig. 4, according to the illustrated embodiments, the first set s1 of air inlets i1 is arranged at a distance di1 from the outlet 11 as measured along the lateral direction La of the vehicle 2. Likewise, the second set s2 of air inlets i2 is arranged at a distance di2 from the outlet 11 as measured along the lateral direction La of the vehicle 2. In other words, according to the illustrated embodiments, the first and second sets s1, s2 of air inlets i1, i2 are arranged on respective lateral sides of the outlet 11. However, according to further embodiments, the air inlets i1, i2 and the outlet 11 of the air-conducting housing 9 may be arranged in another manner.

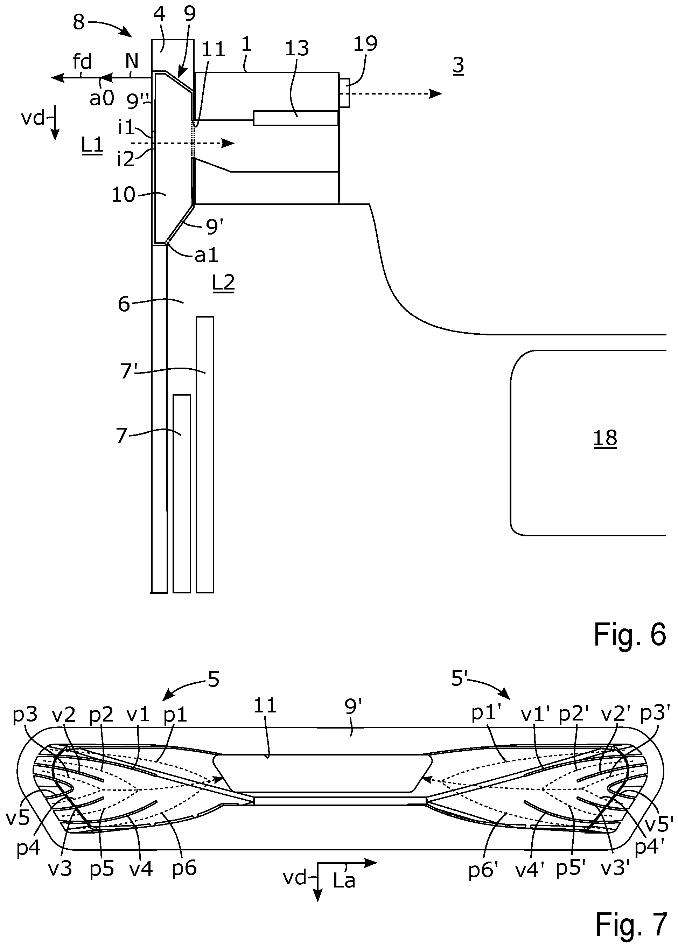

**Fig. 6** illustrates a cross section through a portion of the vehicle 2 illustrated in Fig. 1 - Fig. 3. In Fig. 6, the cross section is made in a plane being parallel to the longitudinal direction Id of the vehicle 2 and parallel to the vertical direction vd of the vehicle 2. The portion of the vehicle 2 illustrated in Fig. 6 comprises the front body panel 4, the front utility compartment 6, the air-conducting housing 9, the ventilation apparatus 1, a portion of the engine 18 of the vehicle 2, and a portion of the occupant compartment 3. In Fig. 6, the front body panel 4 is illustrated in the closed position. Below, simultaneous reference is made to Fig. 1 - Fig. 6, if not indicated otherwise.

As mentioned, the front body panel 4 faces in the forward moving direction fd of the vehicle 2 when the front body panel 4 is in the closed position. According to the illustrated embodiments, the surface normal N of the front body panel 4, at a region of the first and second sets s1, s2 of air inlets i1, i2, is parallel to the forward moving direction fd of the vehicle 2. According to further embodiments, an angle a0 between a surface normal N of the front body panel 4, at the region of the first set s1 of air inlets i1 and/or the second set s2 of air inlets i2, and the forward moving direction fd of the vehicle 2 may be less than 30 degrees or may be less than 10 degrees.

The front body panel 4 is configured to be pivoted to the closed position before operation and travel of the vehicle 2. The vehicle 2 may comprise a safety system preventing take-off if the front body panel 4 is not fully closed, i.e., if the front body panel 4 is not fully pivoted to the closed position. As an alternative, or in addition, the safety system may be configured to output a notification in the driver environment of the vehicle 2 if the front body panel 4 is not fully pivoted to the closed position.

As is best seen in Fig. 6, each of the first set s1 of air inlets i1 and the second set s2 of air inlets i2 is arranged to conduct air into the interior volume 10 of the air-conducting housing 9 from a location L1 in front of the front body panel 4 with respect to the forward moving direction fd. As indicated above, according to the illustrated embodiments, each air inlet i1, i2 of the first set s1 of air inlets i1 and the second set s2 of air inlets i2 is provided as through holes extending through an external wall of the air-conducting housing 9, wherein the external wall faces in the forward moving direction fd of the vehicle 2 when the front body panel 4 is in the closed position.

The front utility compartment 6 accommodates many surfaces, systems, and components which heat the air inside the front utility compartment 6. For example, as schematically depicted in Fig. 6, according to the illustrated embodiments, the front utility compartment 6 accommodates two radiators 7, 7'. Each of the two radiators 7, 7' is configured to cool a respective subsystem of the vehicle 2. According to further embodiments, the front utility compartment 6 may accommodate another number of radiators 7, 7' than two, such as one, three, four, or five. Purely as examples, each of the radiators 7, 7' being arranged in the front utility compartment 6 may be an engine coolant radiator, a charge air cooler, an oil cooler, an air conditioning condenser, a power steering fluid cooler, a fuel cooler, an Exhaust Gas Recirculation (EGR) cooler, and a hydraulic fluid cooler.

Moreover, as seen in Fig. 6, according to the illustrated embodiments, the front utility compartment 6 accommodates at least part of the engine 18 of the vehicle 2, which also at least partially heats the air in the front utility compartment 6 during operation. In embodiments in which the vehicle 2 comprises an at least partially electric powertrain, the front utility compartment 6 may accommodate one or more of an electric propulsion motor, power electronics, a radiator configured to cool parts of the electric powertrain, such as the electric propulsion motor and/or the power electronics, and a radiator configured to cool a propulsion battery of the vehicle 2.

Further examples of components and systems which can be arranged in the front utility compartment 6 that can heat air inside the front utility compartment 6 during operation of the vehicle 2 include a turbocharger, an exhaust manifold, a power steering pump, an air compressor, various belts and pulleys generating frictional heat, an alternator, a battery, and other types of electrical components, such as electronic control modules.

The front utility compartment 6, as referred to herein, may also be referred to as a front utility bay, a front service compartment, a front engine compartment, a front motor compartment, or the like. In this context, the wording 'front' means the area located at a forward part of the vehicle 2 as seen relative to the forward moving direction fd of the vehicle 2, typically positioned ahead of the occupant compartment 3 of the vehicle 2.

Since each of the first set s1 of air inlets i1 and the second set s2 of air inlets i2 is arranged to conduct air into the interior volume 10 of the air-conducting housing 9 from a location L1 in front of the front body panel 4 with respect to the forward moving direction fd, relatively cold and fresh air is conducted into the interior volume 10 of the air-conducting housing 9.

The ventilation apparatus 1 is configured to generate an airflow from the outlet 11 of the air-conducting housing 9 to the occupant compartment 3 via an outlet 19 of the ventilation apparatus 1. In other words, the ventilation apparatus 1 is configured to deliver air from the outlet 11 of the air-conducting housing 9 into the occupant compartment 3. The ventilation apparatus 1 may comprise a fan configured to pump air from the outlet 11 of the air-conducting housing 9 to the occupant compartment 3. The fan of the ventilation apparatus 1 is not illustrated in Fig. 6 for reasons of brevity and clarity. The outlet 19 of the ventilation apparatus 1 may be configured to conduct air into the occupant compartment 3 via a ventilation system comprising a number of ducts and ventilation openings arranged at different locations inside the occupant compartment 3. Such a ventilation system is not depicted in Fig. 6 for reasons of brevity and clarity.

According to the embodiments illustrated in Fig. 6, the ventilation apparatus 1 comprises an air filter unit 13 configured to filtrate particles and matter from the air being pumped through the ventilation apparatus 1. Moreover, the ventilation apparatus 1, as referred to herein, may further comprise one or more heating elements and/or one or more cooling elements, such as one or more evaporators of a heat pump circuit, to control the temperature of the air being conducted through the ventilation apparatus 1 into the occupant compartment 3.

As indicated in Fig. 6, the air-conducting housing 9 is formed by a front plate 9" and a rear housing 9'. The front plate 9" is also indicated in Fig. 4 and the rear housing 9' is also indicated in Fig. 5. According to the illustrated embodiments, each of the first set s1 of air inlets i1 and the second set s2 of air inlets i2 form part of the front plate 9", and the outlet 11 form part of the rear housing 9'.

**Fig. 7** illustrates a front view of the rear housing 9' of the air-conducting housing 9 of the ventilation arrangement 8 of the vehicle 2 illustrated in Fig. 1 - Fig. 3. Below, simultaneous reference is made to Fig. 1 - Fig. 7, if not indicated otherwise.

According to embodiments herein, the air-conducting housing 9 comprises a first guide vane assembly 5 in the interior volume 10 of the air-conducting housing 9. The first guide vane assembly 5 forms a number of flow paths p1 - p6 each extending from at least one air inlet i1 of the first set s1 of air inlets i1 to the outlet 11. As seen in Fig. 7, each of the number of flow paths p1 - p6 has an increasing effective cross sectional area in a direction of the flow path p1 - p6. In this manner, as is further explained herein, a ventilation arrangement 8 is provided having conditions for efficiently separating water entering the interior volume 10 of the air-conducting housing 9 via the first set s1 of air inlets i1 while maintaining a low pressure drop through the ventilation arrangement 8.

Moreover, according to the illustrated embodiments, the air-conducting housing 9 comprises a second guide vane assembly 5' in the interior volume 10 of the air-conducting housing 9. The second guide vane assembly 5' forms a number of flow paths p1' - p6' each extending from at least one air inlet i2 of the second set s2 of air inlets i2 to the outlet 11, wherein each of the number of flow paths p1' - p6' has an increasing effective cross sectional area in a direction of the flow path p1' - p6'. Like above, in this manner, a ventilation arrangement 8 is provided having conditions for efficiently separating water entering the air-conducting housing 9 via the second set s2 of air inlets i2 while maintaining a low pressure drop through the ventilation arrangement 8.

According to the illustrated embodiments, the second guide vane assembly 5' has an at least substantially identical, but mirrored, design as the first guide vane assembly 5. In the following, details of the features, functions, and advantages of the first guide vane assembly 5 is explained in detail. Given the at least substantially identical design of the second guide vane assembly 5', the second guide vane assembly 5' may share the same features, functions, and advantages as those described for the first guide vane assembly 5.

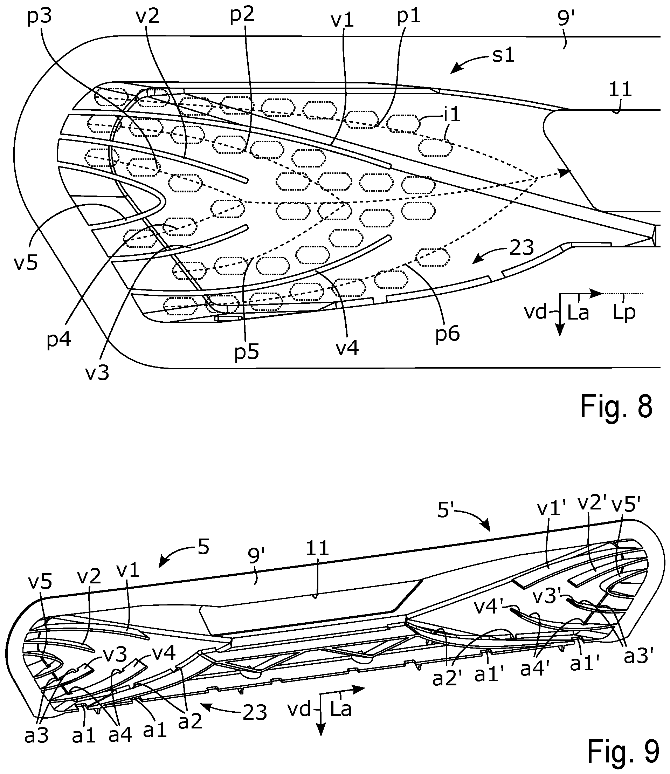

**Fig. 8** illustrates an enlarged view of the rear housing 9' illustrated in Fig. 7. Moreover, in Fig. 8, the first set s1 of air inlets i1 has been schematically indicated in dotted lines. In Fig. 8, only some air inlets i1 of the first set s1 of air inlets i1 have been provided with the reference sign "i1" for reasons of brevity and clarity. Below, simultaneous reference is made to Fig. 1 - Fig. 8, if not indicated otherwise.

As is clearly seen in Fig. 8, and as is mentioned above, the first guide vane assembly 5 forms a number of flow paths p1 - p6 each extending from at least one air inlet i1 of the first set s1 of air inlets i1 to the outlet 11, wherein each of the number of flow paths p1 - p6 has an increasing effective cross sectional area in a direction of the flow path p1 - p6.

In more detail, according to the illustrated embodiments, the first guide vane assembly 5 comprises two first guide vanes v1, v2 and two second guide vanes v3, v4. According to further embodiments, the first guide vane assembly 5 may comprise another number of first guide vanes v1, and/or another number of second guide vanes v2, such as one, three, four, or five. In other words, the first guide vane assembly 5 may comprise one first guide vane v1, v2 and/or one second guide vane v3, v4. Therefore, in several places herein, the first guide vanes v1, v2 are referred to as the one or more first guide vanes v1, v2 and the second guide vanes v3, v4 are referred to as the one or more second guide vanes v3, v4.

The one or more first guide vanes v1, v2 is/are arranged above the one or more second guide vanes v3, v4 relative to a vertical direction vd of the vehicle 2. Furthermore, as seen in Fig. 8, each of the one or more first guide vanes v1, v2 is inclined downwards relative to the vertical direction vd in the direction of the flow paths p1 - p3. Thereby, it can be ensured that water is efficiently separated from the air within the interior volume 10 of the air-conducting housing 9 while maintaining a low pressure drop through the interior volume 10 of the air-conducting housing 9. Moreover, it can be ensured that water being separated from the air can flow efficiently along the one or more first guide vanes v1, v2, aided by gravity, towards a lower part 23 of the air-conducting housing 9.

In this context, the "lower part 23" of the air-conducting housing 9 may refer to the part of the air-conducting housing 9 that is positioned furthest in the vertical direction vd of the vehicle 2, as shown in Fig. 8. Furthermore, in this context, the "lower part 23" of the air-conducting housing 9 may refer to the part of the air-conducting housing 9 that is positioned closest to a flat surface 51 supporting the vehicle 2 when the front body panel 4 is in the closed position, as is illustrated in Fig. 1.

The feature that the one or more first guide vanes v1, v2 is/are arranged above the one or more second guide vanes v3, v4 relative to a vertical direction vd of the vehicle 2 means that the one or more second guide vanes v3, v4 is/are arranged closer to the lower part 23 of the air-conducting housing 9 than the one or more first guide vanes v1, v2.

**Fig. 9** illustrates a perspective view of the rear housing 9' illustrated in Fig. 7 and Fig. 8. Below, simultaneous reference is made to Fig. 1 - Fig. 9, if not indicated otherwise.

As is indicated in Fig. 9, the air-conducting housing 9 comprises a number of drainage apertures a1, a2, a1', a2' at the lower part 23 thereof relative to a vertical direction vd of the vehicle 2. Thereby, it can be ensured that any water being separated from air inside the interior volume 10 of the air-conducting housing 9 can be efficiently drained away from the air-conducting housing 9, preventing it from entering the outlet 11 of the air-conducting housing 9.

According to the illustrated embodiments, the drainage apertures a1, a2, a1', a2' of the air-conducting housing 9 are connected to the location L2 behind the front body panel 4 as seen relative to the forward moving direction fd of the vehicle 2, i.e., are connected to the front utility compartment 6 according to the illustrated embodiments. Each of the drainage apertures a1, a2, a1', a2' of the air-conducting housing 9 may be connected to a drainage hose for a controlled drainage of water from the interior volume 10 of the air-conducting housing 9 to the surroundings.

Furthermore, as is seen and indicated in Fig. 9, according to the illustrated embodiments, each of the one or more second guide vanes v3, v4 is provided with one or more drainage apertures a3, a4. In this manner, any water that accumulates on the surface of the second guide vanes v3, v4 can be efficiently drained away through the one or more drainage apertures a3, a4, further preventing water from being carried along with the airflow towards the outlet 11 of the air-conducting housing 9.

Furthermore, as is best seen in Fig. 8, according to the illustrated embodiments, each of the one or more first guide vanes v1, v2 has an increasing downward inclination along the direction of the flow paths p1 - p3. In Fig. 8, a lateral plane Lp of the vehicle 2 is indicated. The lateral plane Lp of the vehicle 2 is parallel to the lateral direction La of the vehicle 2 as well as to the longitudinal direction Id of the vehicle 2. In other words, the lateral plane Lp of the vehicle 2 is parallel to a horizontal plane when the vehicle 2 is supported by a flat horizontal surface.

The feature that each of the one or more first guide vanes v1, v2 has an increasing downward inclination along the direction of the flow paths p1 - p3 means that the angle between the lateral plane Lp of the vehicle 2 and an extension direction of each of the one or more first guide vanes v1, v2 increases along the direction of the flow paths p1 - p3. In this manner, it can be ensured that water is efficiently separated from the air within the interior volume 10 of the air-conducting housing 9 while maintaining a low pressure drop through the air-conducting housing 9. Moreover, the water separated from the airflow is directed more effectively towards the lower part 23 of the air-conducting housing 9, enhancing the drainage efficiency and reducing the risk of water pooling or re-entering the airflow to reach the outlet 11. Furthermore, it can be ensured that water is consistently guided away from the outlet 11 of the air-conducting housing 9, minimizing the likelihood of damage and maintaining the overall efficiency and reliability of the ventilation arrangement 8.

As can be seen in Fig. 8 and Fig. 9, according to the illustrated embodiments, each of the one or more second guide vanes v3, v4 is inclined upward relative to the vertical direction vd in the direction of the flow paths p4 - p6. As indicated above, the one or more second guide vanes v3, v4 is/are arranged below the one or more first guide vanes v1, v2 relative to a vertical direction vd of the vehicle 2. Due to the upward inclination of the one or more second guide vanes v3, v4, it can be ensured that any separated water from the airflow is prevented from reaching the outlet 11 of the air-conducting housing 9. In other words, it can be ensured that drained water is consistently guided away from the outlet 11 of the air-conducting housing 9, thereby minimizing the risk of moisture-related issues within the ventilation arrangement 8.

Furthermore, as is best seen in Fig. 8, according to the illustrated embodiments, each of the one or more second guide vanes v3, v4 has an increasing upward inclination along the direction of the flow paths p4 - p6. The feature that each of the one or more second guide vanes v3, v4 has an increasing upward inclination along the direction of the flow paths p4 - p6 means that the angle between the lateral plane Lp of the vehicle 2 and an extension direction of each of the one or more second guide vanes v3, v4 increases along the direction of the flow paths p1 - p6. In this manner, the airflow is progressively directed further upward as it moves along the flow path p4 - p6, enhancing the separation of water from the air. Moreover, this increasing upward inclination further ensures that any residual water droplets are more effectively diverted away from the outlet 11 of the air-conducting housing 9, thereby reducing the likelihood of water entering the outlet 11 of the air-conducting housing 9. As a result, it can be further ensured that water is efficiently separated from the air within the interior volume 10 of the air-conducting housing 9 while maintaining a low pressure drop through the air-conducting housing 9.

According to the illustrated embodiments, the air-conducting housing 9 comprises a third guide vane v5 positioned between a lowermost first guide vane v2 and an uppermost second guide vane v3, as seen relative to the vertical direction vd of the vehicle 2. The third guide vane v5 comprises an upper portion which together with the lowermost first guide vane v2 delimits a flow path p3. The upper portion of the third guide vane v5 has not been provided with a reference sign in Fig. 8 and Fig. 9 for reasons of brevity and clarity. The upper portion of the third guide vane v5 is inclined downwards relative to the vertical direction vd in the direction of the flow path p3. Moreover, the upper portion of the third guide vane v5 has an increasing downward inclination along the direction of the flow path p3.

The third guide vane v5 further comprises a lower portion which together with the uppermost second guide vane v3 delimits a flow path p4. The lower portion of the third guide vane v5 has not been provided with a reference sign in Fig. 8 and Fig. 9 for reasons of brevity and clarity. The lower portion of the third guide vane v5 is inclined upwards relative to the vertical direction vd in the direction of the flow path p4. Moreover, the lower portion of the third guide vane v5 has an increasing upward inclination along the direction of the flow path p4.

Due to the features of the herein described ventilation arrangement 8, the ventilation arrangement 8 can separate water entering the air-conducting housing 9 in an efficient manner while maintaining a low pressure drop through the ventilation arrangement 8. This is because the air-conducting housing 9 comprises the first and second guide vane assemblies 5, 5' forming the number of flow paths p1 - p6, p1' - p6', wherein each of the number of flow paths p1 - p6, p1' - p6' has an increasing effective cross sectional area in a direction of the flow path p1 - p6, p1' - p6'.

The increasing effective cross sectional area in a direction of the flow path p1 - p6, p1' - p6' results in a decreased air flow velocity along the flow path p1 - p6, p1' - p6'. This reduced air flow velocity along the flow path p1 - p6, p1' - p6' results in an efficient water separating capability from the air while maintaining a low pressure drop through the ventilation arrangement 8.

Accordingly, a ventilation arrangement 8 is provided capable of preventing water ingress, thereby reducing the risk of damage to electrical components within the ventilation arrangement 8, and/or a ventilation system of a vehicle 2, and avoiding potential short circuits and corrosion that could result in costly repairs. Furthermore, the efficient separation of water can mitigate the occurrence of unpleasant odours and inhibits mould growth, thereby improving air quality and providing a healthier environment for occupants inside the occupant compartment 3 of the vehicle 2.

Additionally, by maintaining a low pressure drop through the ventilation arrangement 8, the ventilation arrangement 8 can operate with reduced mechanical strain on components and arrangements, such as a fan motor, enhancing energy efficiency of the vehicle 2 and prolonging the lifespan of the ventilation arrangement 8.

The wording "low pressure drop", as used herein, may be interpreted as meaning a pressure drop of less than 200 Pa, or less than 150 Pa.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A ventilation arrangement (8) configured to generate an airflow into an occupant compartment (3) of a vehicle (2), wherein the ventilation arrangement (8) comprises:
- an air-conducting housing (9) comprising a first set (s1) of air inlets (i1), an interior volume (10), and an outlet (11), and
- a ventilation apparatus (1) configured to deliver air from the outlet (11) of the air-conducting housing (9) into the occupant compartment (3),
wherein the air-conducting housing (9) comprises a first guide vane assembly (5) in the interior volume (10) forming a number of flow paths (p1 - p6) each extending from at least one air inlet (i1) of the first set (s1) of air inlets (i1) to the outlet (11), and wherein each of the number of flow paths (p1 - p6) has an increasing effective cross sectional area in a direction of the flow path (p1 - p6).

2. The ventilation arrangement (8) according to claim 1, wherein the air-conducting housing (9) comprises a second set (s2) of air inlets (i2), and wherein the air-conducting housing (9) comprises a second guide vane assembly (5') in the interior volume (10) forming a number of flow paths (p1' - p6') each extending from at least one air inlet (i2) of the second set (s2) of air inlets (i2) to the outlet (11), and wherein each of the number of flow paths (p1' - p6') has an increasing effective cross sectional area in a direction of the flow path (p1' - p6').

3. A vehicle (2) comprising:
- an occupant compartment (3), and
- a ventilation arrangement (8) according to claim 1 or 2.

4. The vehicle (2) according to claim 3, wherein the first guide vane assembly (5) comprises one or more first guide vanes (v1, v2) and one or more second guide vanes (v3, v4), the one or more first guide vanes (v1, v2) being arranged above the one or more second guide vanes (v3, v4) relative to a vertical direction (vd) of the vehicle (2), and wherein each of the one or more first guide vanes (v1, v2) is inclined downwards relative to the vertical direction (vd) in the direction of the flow paths (p1 - p6).

5. The vehicle (2) according to claim 4, wherein each of the one or more first guide vanes (v1, v2) has an increasing downward inclination along the direction of the flow paths (p1 - p6).

6. The vehicle (2) according to claim 4 or 5, wherein each of the one or more second guide vanes (v3, v4) is inclined upward relative to the vertical direction (vd) in the direction of the flow paths (p1 - p6).

7. The vehicle (2) according to claim 6, wherein each of the one or more second guide vanes (v3, v4) has an increasing upward inclination along the direction of the flow paths (p1 - p6).

8. The vehicle (2) according to any one of the claims 4 - 7, wherein each of the one or more second guide vanes (v3, v4) is provided with one or more drainage apertures (a3, a4).

9. The vehicle (2) according to any one of the claims 3 - 8, wherein the air-conducting housing (9) comprises a number of drainage apertures (a1, a2) at a lower part (23) thereof relative to a vertical direction (vd) of the vehicle (2).

10. The vehicle (2) according to any one of the claims 3 - 9, wherein the first set (s1) of air inlets (i1) is arranged at a distance (di1) from the outlet (11) as measured along a lateral direction (La) of the vehicle (2).

11. The vehicle (2) according to claim 10, wherein the vehicle (2) comprises a ventilation arrangement (8) according to claim 2, and wherein the second set (s2) of air inlets (i2) is arranged at a distance (di2) from the outlet (11), and at a distance (di3) from the first set (s1) of air inlets (i1), as measured along a lateral direction (La) of the vehicle (2).

12. The vehicle according to claim 10 or 11, wherein the first and second sets (s1, s2) of air inlets (i1, i2) are arranged on respective lateral sides of the outlet (11).

13. The vehicle (2) according to any one of the claims 3 - 12, wherein the air-conducting housing (9) form part of a front body panel (4) of the vehicle (2), wherein the front body panel (4) faces in a forward moving direction (fd) of the vehicle (2), and wherein the first set (s1) of air inlets (i1) is arranged to conduct air into the interior volume (10) from a location (L1) in front of the front body panel (4) with respect to the forward moving direction (fd).

14. The vehicle (2) according to claim 13, wherein an angle (a0) between a surface normal (N) of the front body panel (4) at a region of the first set (s1) of air inlets (i1) and the forward moving direction (fd) of the vehicle (2) is less than 30 degrees or is less than 10 degrees.

15. The vehicle (2) according to any one of the claims 3 - 14, wherein the vehicle (2) is a heavy road vehicle, such as a truck or a bus.
